# EUROPEAN PATENT SPECIFICATION

(11) **EP 4 044 318 B1**
(45) Date of publication and mention of the grant of the patent: **08.01.2025**
(21) Application number: 20889412.1
(22) Date of filing: 20.11.2020
(51) Int. Cl.: H01M 10/058, H01M 10/0587, H01M 10/42, H01M 4/62, H01M 50/10, H01M 10/052, H01M 4/04, H01M 4/66, H01M 50/46, H01M 50/463, H01M 4/02, H01M 4/13, H01M 4/75, H01M 50/102, H01M 50/116, H01M 50/136, H01M 50/491

(54) **FLEXIBLE SECONDARY BATTERY**
FLEXIBLE SEKUNDÄRBATTERIE
BATTERIE SECONDAIRE SOUPLE

(30) Priority: 22.11.2019 KR 20190151648
(43) Date of publication of application: 17.08.2022
(73) Proprietor: LG Energy Solution, Ltd., Seoul 07335 (KR)
(72) Inventor: UHM, In-Sung, Daejeon 34122 (KR); CHOI, Jung-Hun, Daejeon 34122 (KR); KANG, Yong-Hee, Daejeon 34122 (KR); JANG, Min-Chul, Daejeon 34122 (KR)
(74) Representative: Hoffmann Eitle
(86) International application number: PCT/KR2020/016525
(87) International publication number: WO 2021/101338

(56) References cited:
- WO-A1-2015/194909
- CN-A- 109 802 121
- KR-A- 20100 127 730
- KR-A- 20140 032 577
- KR-B1- 101 503 571
- US-A- 5 001 023
- US-A1- 2017 200 979
- US-A1- 2019 267 633
- SUMBOJA AFRIYANTI ET AL: "Electrochemical energy storage devices for wearable technology: a rationale for materials selection and cell design", CHEMICAL SOCIETY REVIEWS, vol. 47, no. 15, 27 June 2018 (2018-06-27), UK, pages 5919 - 5945, XP055813741, ISSN: 0306-0012, Retrieved from the Internet <URL:https://pubs.rsc.org/en/content/articlepdf/2018/cs/c8cs00237a> [retrieved on 20231128], DOI: 10.1039/C8CS00237A
- ZHU YUN-HAI, YANG XIAO-YANG, LIU TONG, ZHANG XIN-BO: "Flexible 1D Batteries: Recent Progress and Prospects", ADVANCED MATERIALS, VCH PUBLISHERS, vol. 32, no. 5, 1 February 2020 (2020-02-01), pages 1901961, XP055813740, ISSN: 0935-9648, DOI: 10.1002/adma.201901961
- SUMBOJA AFRIYANTI, LIU JIAWEI, ZHENG WESLEY GUANGYUAN, ZONG YUN, ZHANG HUA, LIU ZHAOLIN: "Electrochemical energy storage devices for wearable technology: a rationale for materials selection and cell design", CHEMICAL SOCIETY REVIEWS, ROYAL SOCIETY OF CHEMISTRY, UK, vol. 47, no. 15, 1 January 2018 (2018-01-01), UK, pages 5919 - 5945, XP055813741, ISSN: 0306-0012, DOI: 10.1039/C8CS00237A

## Description

### TECHNICAL FIELD

The present disclosure relates to a flexible secondary battery, and more particularly, to a flexible secondary battery with improved battery capacity.

The present application claims the benefit of Korean Patent Application No. 10-2019-0151648 filed on November 22, 2019 with the Korean Intellectual Property Office, the disclosure of which is incorporated herein by reference in its entirety.

### BACKGROUND ART

Lithium secondary batteries have high energy density and high operating voltage as well as the outstanding storage and life characteristics, and due to these advantages, they are widely used in portable electronic devices including personal computers, camcorders, mobile phones, portable CD players and PDAs.

In general, a lithium secondary battery includes a cylindrical or prismatic case and an electrode assembly received in the case together with an electrolyte. Here, the electrode assembly includes a stack of a positive electrode, a separator and a negative electrode, and generally has a Jelly-Roll type winding structure or a stack structure.

Recently, there are, for example, wire-type flexible secondary batteries that can change into any shape and thus have a wide range of applications. The flexible secondary battery has a very high length-to-diameter ratio, and in general, includes an inner electrode, a separator disposed around the inner electrode and an outer electrode disposed around the separator.

Keeping up with development of high capacity electronic products, it is necessary to improve the battery capacity per unit length in the wire-type flexible secondary batteries, and to this end, attempts have been made to coat active materials used in wire batteries to a predetermined thickness or loading amount or above.

However, in this case, with the increasing active material layer thickness, the electrode resistance decreases, and as a consequence, the battery performance, life and output characteristics degrade, so there is a limitation in improving the battery capacity.

### DISCLOSURE

### Technical Problem

The present disclosure is designed to solve the above-described problem, and therefore the present disclosure is directed to providing a flexible secondary battery with improved battery capacity.

### Technical Solution

To solve the problem of the present disclosure, there is provided a flexible secondary battery of the following embodiments.

According to a first embodiment, there is provided a flexible secondary battery comprising a lithium metal coated wire; a positive electrode wire spirally wound around an outer surface of the lithium metal coated wire, spaced apart at a predetermined interval, the positive electrode wire including a first porous coating layer formed on an outer surface; and a negative electrode wire spirally wound around the outer surface of the lithium metal coated wire in an alternating manner with the wound positive electrode wire corresponding to the predetermined interval, the negative electrode wire including a second porous coating layer formed on an outer surface.

According to a second embodiment, there is provided a flexible secondary battery comprising a lithium metal coated wire; a wire-type negative electrode spirally wound around an outer surface of the lithium metal coated wire; a separation layer wound spirally around an outer surface of the wire-type negative electrode; and a wire-type positive electrode spirally wound around an outer surface of the separation layer.

According to a second embodiment, there is provided a flexible secondary battery comprising a lithium metal coated wire; a wire-type negative electrode spirally wound around an outer surface of the lithium metal coated wire; a separation layer spirally wound around an outer surface of the wire-type negative electrode; and a sheet-type positive electrode spirally wound around an outer surface of the separation layer.

According to a fourth embodiment, in any one of the first to third embodiments, the lithium metal coated wire may be a lithium metal coated copper wire or a lithium metal coated nickel wire.

According to a fifth embodiment, in any one of the first to fourth embodiments, a lithium ion of the lithium metal coated wire in contact with the negative electrode may move to the positive electrode by liquid diffusion.

According to a sixth embodiment, in the first embodiment, the surface on which the positive electrode wire is wound and the surface on which the negative electrode wire may be placed on a same circumferential surface.

According to a seventh embodiment, in any one of the first to sixth embodiments, the first porous coating layer and the second porous coating layer may be an electrolyte layer or a separator independently of each other.

According to an eighth embodiment, in the third embodiment, the sheet-type positive electrode may be spirally wound in an overlapping or non-overlapping configuration.

According to a ninth embodiment, in any one of the first to eighth embodiments, an outer surface of the flexible secondary battery may be coated with a protective coating.

According to a tenth embodiment, in any one of the first to ninth embodiments, the flexible secondary battery may be a lithium secondary battery.

### Advantageous Effects

According to an embodiment of the present disclosure, the lithium metal coated wire is applied to the flexible secondary battery such that the lithium metal coated wire comes into contact with the negative electrode, and after the injection of the electrolyte solution, a Li ion is intercalated into the wire battery negative electrode, where lithiation is performed, thereby compensating the irreversibility of the negative electrode, leading to the increased capacity of the battery.

In addition, it is possible to prevent the battery capacity reduction that occurs when the negative electrode is manufactured into a thin film using a high capacity negative electrode material such as SiO to ensure flexibility due to the properties of the flexible battery.

### BRIEF DESCRIPTION OF THE DRAWINGS

The accompanying drawings illustrate preferred embodiments of the present disclosure, and together with the detailed disclosure, serve to help the understanding of the technical aspect of the present disclosure, and thus the present disclosure should not be interpreted as being limited to the drawings.
FIG. 1 is a diagram schematically showing a positive electrode wire and a negative electrode wire of a flexible secondary battery according to an embodiment of the present disclosure.
FIGS. 2 and 3 are diagrams schematically showing a main configuration of a flexible secondary battery according to an embodiment of the present disclosure.
FIG. 4 is a diagram schematically showing a flexible secondary battery in a bent shape according to an embodiment of the present disclosure.
FIGS. 5 and 6 are diagrams schematically showing a main configuration of a flexible secondary battery according to an embodiment of the present disclosure.

### DETAILED DESCRIPTION

Hereinafter, the present disclosure will be described in detail with reference to the accompanying drawings. It should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and the illustrations in the drawings are just a most preferred embodiment of the present disclosure, and do not fully describe the technical aspects of the present disclosure, and thus it should be understood that a variety of other equivalents and variations could have been made thereto at the time that the application was filed.

According to an aspect of the present disclosure, there is provided a flexible secondary battery comprising:
a lithium metal coated wire;
a positive electrode wire spirally wound around an outer surface of the lithium metal coated wire, spaced apart at a predetermined interval, the positive electrode wire including a first porous coating layer formed on an outer surface; and
a negative electrode wire spirally wound around the outer surface of the lithium metal coated wire in an alternating manner with the wound positive electrode wire corresponding to the predetermined interval, the negative electrode wire including a second porous coating layer formed on an outer surface.

In the specification, "spiral" or "helix" depicts twisted with a predetermined range and may be interchangeably used herein, and refers collectively to a similar shape to the shape of a typical spring.

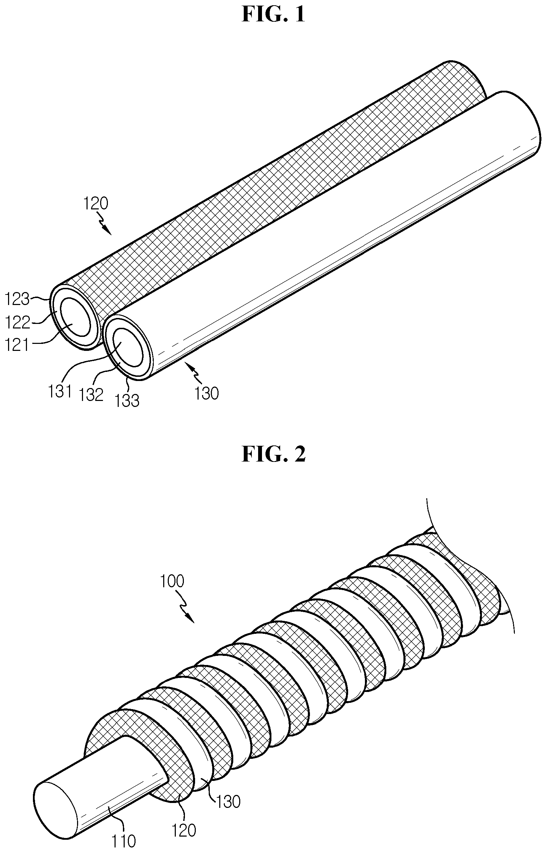

Referring to FIGS. 1 to 3, a flexible secondary battery 100 according to an embodiment of the present disclosure includes a lithium metal coated wire 110; a positive electrode wire 120 spirally wound around the outer surface of the lithium metal coated wire 110, spaced apart at a predetermined interval, the positive electrode wire 120 including a first porous coating layer 123 formed on an outer surface; and a negative electrode wire 130 spirally wound around the outer surface of the lithium metal coated wire 110 in an alternating manner with the wound positive electrode wire 120 corresponding to the predetermined interval, the negative electrode wire 130 including a second porous coating layer 133 formed on an outer surface.

That is, the positive electrode wire 120 and the negative electrode wire 130 are formed in an alternating manner in the same imaginary cylindrical or polygonal prism shape, and have a new type electrode arrangement structure beyond the concept of the inner electrode and the outer electrode. Accordingly, it is possible to prevent a separation phenomenon that may occur on the electrode winding surface in the conventional art, thereby ensuring the durability of the flexible secondary battery against bending.

Additionally, since the surface (the winding surface) on which the positive electrode wire 120 is wound and the surface (the winding surface) on which the negative electrode wire 130 is wound are placed on the same circumferential surface, when the battery is bent, the positive electrode wire 120 and the negative electrode wire 130 move within the same bending range, thereby preventing vertical stimuli. Additionally, the flexible secondary battery 100 of the present disclosure includes the positive electrode wire 120 and the negative electrode wire 130 arranged in contact with each other, resulting in significantly improved flexibility, and thus even though the battery is repeatedly bent, it is possible to avoid damage to the first porous coating layer and the second porous coating layer caused by friction between the porous coating layers, and prevent a short between the electrodes occurring in the above-described conventional battery structure.

Here, the positive electrode wire 120 includes a conductor wire 121 coated with a positive electrode active material 122, and is spirally wound around the outer surface of the lithium metal coated wire 110 and extends in the lengthwise direction of the flexible secondary battery 100. The conductor wire serving as a current collector may use aluminum, stainless steel, nickel, copper and silver, and the positive electrode active material 122 coated on the surface of the conductor wire 121 may employ positive electrode active materials for lithium secondary batteries commonly used in the art.

Additionally, the negative electrode wire 130 includes a conductor wire 131 coated with a negative electrode active material 132, and is spirally wound around the outer surface of the lithium metal coated wire 110 and extends in the lengthwise direction of the flexible secondary battery 100 in an alternating manner with the positive electrode wire 120. The conductor wire 131 serving as a current collector may use the above-described materials used in the positive electrode wire 120, and the negative electrode active material 132 coated on the surface of the conductor wire 131 may employ negative electrode active materials for lithium secondary batteries commonly used in the art.

Meanwhile, the lithium metal coated wire 110 may maintain the linear shape of the flexible secondary battery 100, prevent the deformation of the battery structure by external forces and the destruction or deformation of the electrode structure and ensure the flexibility of the flexible secondary battery 100.

According to an embodiment of the present disclosure, the lithium metal coated wire may be a lithium metal coated copper wire or a lithium metal coated nickel wire.

Additionally, the first porous coating layer 123 and the second porous coating layer 133 prevent the direct contact between the positive electrode wire 120 and the negative electrode wire 130, thereby eliminating the need for a separate additional separator.

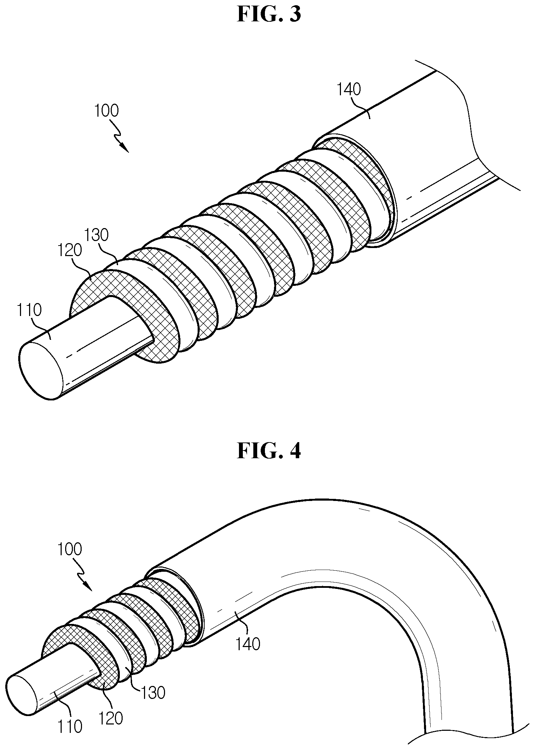

Referring to FIG. 3, according to an embodiment of the present disclosure, the flexible secondary battery 100 includes a protective coating 140, and the protective coating 140 is an insulator and is formed over the outermost side of the flexible secondary battery 100 to protect the electrode from moisture in air and external impacts.

The protective coating 140 may use a common polymer resin including a water barrier layer. In this instance, the water barrier layer may include aluminum or a liquid crystal polymer having high water barrier performance, and the polymer resin may include PET, PVC, HDPE or an epoxy resin.

Meanwhile, the first porous coating layer 123 and the second porous coating layer 133 may be an electrolyte layer or a separator independently of each other.

The electrolyte layer serving as an ion channel includes a gel polymer electrolyte using PEO, PVdF, PVdF-HFP, PMMA, PAN or PVAc; or a solid electrolyte using PEO, polypropylene oxide (PPO), polyethylene imine (PEI), polyethylene sulphide (PES) or polyvinyl acetate (PVAc). The matrix of the solid electrolyte preferably has a polymer or ceramic glass backbone. A common polymer electrolyte has satisfactory ionic conductivity but very slow ion movements in terms of reaction rate, so it is desirable to use the gel polymer electrolyte that is easy for an ion to move rather than solid. Since the gel polymer electrolyte has poor mechanical properties, a support may be included to improve the mechanical properties, and the support may include a porous support or a crosslinked polymer. The electrolyte layer of the present disclosure may serve as a separator, thereby eliminating the need for a separator.

According to an embodiment of the present disclosure, the electrolyte layer may further include a lithium salt. The lithium salt may improve the ionic conductivity and the reaction rate, and its non-limiting example may include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, lithium chloroborate, lower aliphatic lithium carbonate and lithium tetraphenylb orate.

The separator is not limited to a particular type, and may include a porous polymer substrate made of at least one type polyolefin-based polymer selected from ethylene homopolymer, propylene homopolymer, ethylene-butene copolymer, ethylene-hexene copolymer or ethylene-methacrylate copolymer; a porous polymer substrate made of at least one type polymer selected from polyester (polyethyleneterephthalate, polyethylenenaphthalate, etc.), polyacetal, polyamide, polycarbonate, polyimide, polyether ether ketone, polyether sulfone, polyphenylene oxide, polyphenylene sulfide or polyurethane; a porous substrate made of a mixture of inorganic particles and a binder polymer; or a separator including a porous coating layer made of a mixture of inorganic particles and a binder polymer on at least one surface of the porous polymer substrate; and a separator foamed through a foaming phenomenon after coating the electrode wire with a mixture of a polyolefin in a liquid state and a foaming agent.

In this instance, in the porous coating layer made of the mixture of inorganic particles and a binder polymer, the inorganic particles packed in contact with each other are bonded by the binder polymer to form interstitial volume between the inorganic particles, and the interstitial volume between the inorganic particles is empty space which forms a pore.

That is, the binder polymer holds the inorganic particles together, for example, connects and fixes the inorganic particles to keep them in a bonded state. Additionally, the pore in the porous coating layer is where the interstitial volume between the inorganic particles becomes the empty space, and it is a space defined by the inorganic particles in substantial contact with each other in the closed packed or densely packed structure by the inorganic particles. The pores of the porous coating layer may provide a channel for movement of a lithium ion essential to operate the battery.

Meanwhile, the flexible secondary battery 100 may be any type of secondary battery, but as shown in FIG. 4, preferably, a flexible secondary battery which is flexible enough to easily bend.

According to an aspect of the present disclosure, there is provided a flexible secondary battery comprising:
a lithium metal coated wire;
a wire-type negative electrode spirally wound around an outer surface of the lithium metal coated wire;
a separation layer spirally wound around an outer surface of the wire-type negative electrode; and
a wire-type positive electrode spirally wound around an outer surface of the separation layer.

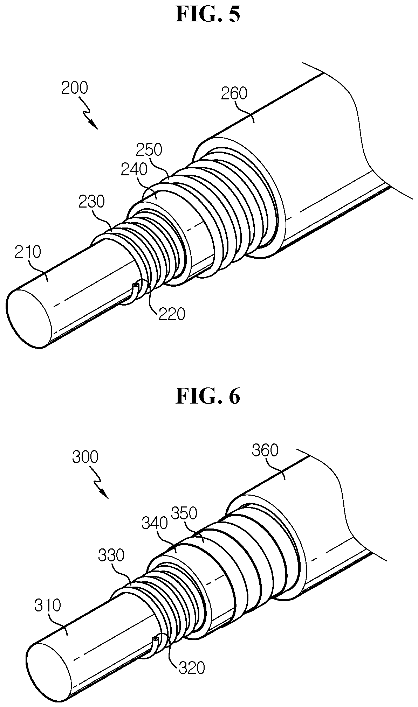

Referring to FIG. 5, a flexible secondary battery 200 according to an embodiment of the present disclosure includes a lithium metal coated wire 210; a wire-type negative electrode 230 spirally wound around the outer surface of the lithium metal coated wire 210, and including a wire-type negative electrode current collector 220 and a negative electrode active material layer (not shown) formed on the surface of the wire-type negative electrode current collector 220; a separation layer 240 spirally wound around the outer surface of the wire-type negative electrode 230 to prevent a short of the electrode; and a wire-type positive electrode 250 spirally wound around the outer surface of the separation layer 240.

According to an embodiment of the present disclosure, the flexible secondary battery 200 may further include a protective coating 260 on the outer surface of the wire-type positive electrode 250.

According to an embodiment of the present disclosure, the lithium metal coated wire may be a lithium metal coated copper wire or a lithium metal coated nickel wire.

According to an aspect of the present disclosure, there is provided a flexible secondary battery comprising:
a lithium metal coated wire;
a wire-type negative electrode spirally wound around an outer surface of the lithium metal coated wire;
a separation layer spirally wound around an outer surface of the wire-type negative electrode; and
a sheet-type positive electrode spirally wound around an outer surface of the separation layer.

Referring to FIG. 6, a flexible secondary battery 300 extending in the lengthwise direction according to an embodiment of the present disclosure includes a lithium metal coated wire 310; a wire-type negative electrode 330 spirally wound around the outer surface of the lithium metal coated wire 310, and including a wire-type negative electrode current collector 320 and a negative electrode active material layer (not shown) formed on the surface of the wire-type negative electrode current collector 320; a separation layer 340 spirally wound around the outer surface of the wire-type negative electrode 330 to prevent a short of the electrode; a sheet-type positive electrode 350 spirally wound around the outer surface of the separation layer 340; and a protective coating 360 formed around the outer surface of the positive electrode 350.

According to an embodiment of the present disclosure, the lithium metal coated wire may be a lithium metal coated copper wire or a lithium metal coated nickel wire.

The separation layer may be an electrolyte layer or a separator. In this instance, the electrolyte layer or the separator of the separation layer may be appropriately selected from the electrolyte layer or the separator applied in the first porous coating layer and the second porous coating layer.

According to an embodiment of the present disclosure, the sheet-type positive electrode 350 may include a positive electrode current collector, and a positive electrode active material layer formed on one surface of the positive electrode current collector. Alternatively, the sheet-type positive electrode 350 may include a positive electrode current collector and a positive electrode active material layer formed on one surface of the positive electrode current collector, and may further include a conductive layer formed on the upper surface of the positive electrode active material layer and including a conductive material and a binder. Alternatively, the sheet-type positive electrode 350 may further include a porous first support layer formed on the upper surface of the conductive layer, and a second support layer formed on the other surface of the positive electrode current collector.

Here, the first support layer may be a mesh type porous membrane or a nonwoven fabric. As the first support layer has a porous structure, the electrolyte solution transport to the positive electrode active material layer is enhanced, and the first support layer itself is impregnated with the electrolyte solution very well, thereby ensuring ionic conductivity, preventing the internal resistance of the battery from rising, and preventing the battery performance degradation.

Additionally, the first support layer may be made of at least one selected from the group consisting of high density polyethylene, low density polyethylene, linear low density polyethylene, ultra high molecular weight polyethylene, polypropylene, polyethyleneterephthalate, polybutyleneterephthalate, polyester, polyacetal, polyamide, polycarbonate, polyimide, polyetheretherketone, polyethersulfone, polyphenyleneoxide, polyphenylenesulfide and polyethylenenaphthalate.

Meanwhile, the sheet-type positive electrode 350 may further include, on the first support layer, the conductive layer including the conductive material and the binder. The conductive layer improves the conductivity of the positive electrode active material layer and reduces the resistance of the electrode, thereby preventing the battery performance degradation.

In this instance, the conductive layer may include the conductive material and the binder mixed at a weight ratio of 80:20 to 99: 1. When the amount of the binder increases, the resistance of the electrode may increase too much, but when the amount satisfies the above-described range, an excessive rise in the electrode resistance is prevented. Further, as described above, since the first support layer mitigates the delamination of the electrode active material layer, even though the binder is included in a relatively small amount, it is not difficult to ensure the flexibility of the electrode.

In this instance, the conductive material may include at least one selected from the group consisting of carbon black, acetylene black and ketjen black, carbon fiber, carbon nanotubes and graphene, but is not limited thereto.

Additionally, the binder may include at least one selected from the group consisting of polyvinylidene fluoride (PVDF), polyvinylidene fluoride-co-hexafluoro propylene, polyvinylidene fluoride-co-trichloroethylene, polybutyl acrylate, polymethyl methacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, styrene-butadiene rubber, acrylonitrile-styrene-butadiene copolymer and polyimide, but is not limited thereto.

The sheet-type positive electrode 350 may further include the second support layer on the other surface of the positive electrode current collector. Here, the second support layer may prevent a short of the current collector, and further improve the flexibility of the current collector.

In this instance, the second support layer may be a polymer film, and in this instance, the polymer film may be made of at least one selected from the group consisting of polyolefin, polyester, polyimide and polyamide.

The sheet-type positive electrode may be a strip structure extending in a direction.

Additionally, the sheet-type positive electrode may be spirally wound in a non-overlapping configuration. In this instance, the sheet-type positive electrode may be spirally wound in a non-overlapping configuration, spaced apart at an interval that is less than double the width of the sheet-type positive electrode, to prevent the battery performance degradation.

Additionally, the sheet-type positive electrode may be spirally wound in an overlapping configuration. In this instance, the sheet-type positive electrode may be spirally wound such that the width of the overlapped parts is 0.9 times or less larger than the width of the sheet-type positive electrode to prevent the internal resistance of the battery from rising too much.

The protective coating may include a metal foil layer, a first polymer resin layer formed on one surface of the metal foil layer, and a mechanical support layer formed on the other surface of the metal foil layer.

Additionally, according to an embodiment of the present disclosure, the second support layer of the sheet-type positive electrode 350 and the first polymer resin layer of the protective coating 360 may be made of the same material and attached to each other.

A method for manufacturing a flexible secondary battery according to an embodiment of the present disclosure will be described with reference to FIG. 6.

To begin with, a wire-type negative electrode 330 having a hollow at the center is prepared by spirally winding a wire-type negative electrode current collector 320 having a negative electrode active material layer (not shown) on the surface.

A method of forming the negative electrode active material layer on the surface of the wire-type negative electrode current collector 320 may use a common coating method, to be specific, an electroplating or anodic oxidation process, and it is desirable to coat an electrode slurry including an active material using a comma coater or a slot die coater. Additionally, an electrode slurry including an active material may be manufactured using dip coating or extrusion coating using an extruder.

Subsequently, a separation layer 340 sheet is spirally wound around the outer surface of the wire-type negative electrode to prevent a short of the electrode.

Subsequently, a sheet-type positive electrode 350 is formed.

In more detail, (S1) a sheet-type positive electrode may be formed by coating a positive electrode active material slurry on one surface of a sheet-type positive electrode current collector, and drying to form a positive electrode active material layer.

Alternatively, according to an embodiment of the present disclosure, a sheet-type positive electrode may be manufactured by (S1) forming a second support layer on one surface of a sheet-type positive electrode current collector by pressing; (S2) (optionally) coating a positive electrode active material slurry on the other surface of the positive electrode current collector and drying to form a positive electrode active material layer; (S3) (optionally) coating a conductive material slurry including a conductive material and a binder on the upper surface of the positive electrode active material layer, and forming a porous first support layer on the upper surface of the conductive material slurry; and (S4) pressing the result of (S3) and attaching between the positive electrode active material layer and the first support layer to form an integrated conductive layer.

Subsequently, an electrode assembly is formed by spirally winding the sheet-type positive electrode 350 around the outer surface of the separation layer 340.

Subsequently, a protective coating 360 is formed around the outer surface of the electrode assembly.

According to an embodiment of the present disclosure, the protective coating 360 may include a metal foil layer, a first polymer resin layer formed on one surface of the metal foil layer, and a mechanical support layer formed on the other surface of the metal foil layer, and in this instance, the protective coating 360 may be skin-tightly formed on the outer surface of the electrode assembly, and heat and pressure may be applied to the surface of the protective coating 360 so that the second support layer and the first polymer resin layer may be attached and fixed to each other.

Subsequently, an electrolyte is injected into the electrode assembly having the prepared protective coating, and an electrolyte solution injection portion is completely sealed to manufacture a flexible secondary battery.

The flexible secondary battery of the present disclosure includes the lithium metal coated metal wire in the hollow of the existing wire-type secondary battery, and the lithium metal coated metal wire is not connected to the inner negative electrode with a wire, and may be in contact with the inner negative electrode without any separation membrane.

As the lithium metal coated metal wire is disposed at the central hollow of the flexible secondary battery, when the lithium metal coated metal wire comes into contact with the electrolyte solution, the lithium metal coated metal wire releases a lithium ion, where prelithiation of the inner negative electrode is performed, thereby compensating the irreversibility of the inner negative electrode.

In detail, after the assembly of the flexible secondary battery according to an embodiment of the present disclosure is completed, when the electrolyte solution is injected, the lithium metal coated on the metal wire comes into contact with the electrolyte solution, causing a short, the lithium metal break up into a lithium ion and an electron, and the lithium ion moves to the negative electrode, and during charging, prelithiation is performed.

In particular, when a high capacity negative electrode material, for example, a silicon-based negative electrode active material including SiO is used to ensure flexibility due to the properties of the flexible battery, the irreversible phenomenon of the negative electrode may be a grave problem, but to prevent the problem, the present disclosure may carry out prelithiation through the lithium metal coated metal wire.

Additionally, in the flexible secondary battery according to an embodiment of the present disclosure, at least one of the negative electrode or the positive electrode is wire-type and spirally wound and thus has an open structure to allow the lithium ion to move outward.

Accordingly, the prelithiated lithium ion intercalated from the lithium metal coated metal wire to the inner negative electrode may move to the outer positive electrode by liquid diffusion using the open structure.

Meanwhile, the embodiments of the present disclosure disclosed in the specification and drawings present a particular example to help a better understanding of the present disclosure, but not intended to limit the scope of the present disclosure. It is obvious to those skilled in the art that besides the disclosed embodiments, variations may be made thereto based on the technical aspects of the present disclosure.

### Example 1

A slurry prepared by mixing an active material of artificial graphite and SiO (a weight ratio of artificial graphite and SiO is 85:15), carbon black, and polyvinylidene fluoride (binder) at a weight ratio of 94:2:4 with an N-methylpyrrolidone (NMP) solvent is coated on a copper wire (Cu wire) having the diameter of 250 *µ*m with the loading discharge capacity of 4.4 mAh/cm² (400*µ*m in thickness including the copper wire) using an extrusion type coater.

Subsequently, PVdF-HFP (HFP is 5 weight% of the total) is dissolved in acetone at the concentration of 16.8% to prepare a binder solution, and the binder solution is coated to the thickness of 10*µ*m, to manufacture a 410*µ*m thick wire-type negative electrode.

In this instance, the net density of artificial graphite is 2.25 g/cc, and the net density of SiO is 2.260.

The charge capacity of the negative electrode is 629.78 mAh/g, the discharge capacity is 511.98 mAh/g, and the initial efficiency is 81.29%. In this instance, the charge capacity, the discharge capacity, and the initial efficiency of the negative electrode are evaluated after manufacturing a coin-type half-cell secondary battery. A method for manufacturing the coin-type half-cell secondary battery is as follows.

The manufactured negative electrode is punched to the size of 1.4875 cm² (area), and an electrode assembly is manufactured using Li metal as a counter electrode and a polyolefin separator interposed between the negative electrode and the Li metal. 1M LiPF₆ is added to a non-aqueous electrolyte solution solvent in which ethylene carbonate and ethylmethyl carbonate are mixed at a volume ratio of 3:7 to prepare a non-aqueous electrolyte solution, and the non-aqueous electrolyte solution is injected into the electrode assembly to manufacture a coin-type half-cell secondary battery.

Additionally, when measuring the charge capacity, the discharge capacity, and the initial efficiency, the charge condition is 4.2V, 0.2C (2.15mA) (0.05C current cut-off) in CC/CV mode, and the discharge condition is 2.5V, 0.2C (2.15mA) (voltage cutoff) in CC mode.

LiNi_{0.8}Mn_{0.1}Co_{0.1}O₂ (NMC811) as a positive electrode active material, carbon black, and polyvinylidene fluoride (binder) at a weight ratio of 96:2:2 are mixed with an N-methylpyrrolidone (NMP) solvent to prepare a slurry, and the slurry is coated on a non-laminated surface of a PET (12*µ*m) laminated aluminum foil (Al foil) (20*µ*m) to manufacture a sheet-type positive electrode having the loading discharge capacity of 4.0 mAh/cm².

In this instance, the net density of LiNi_{0.8}Mn_{0.1}Co_{0.1}O₂ (NMC811) is 4.74 g/cc.

The charge capacity of the positive electrode is 227.6 mAh/g, the discharge capacity is 208.6 mAh/g, and the initial efficiency is 92.2%.

In this instance, the charge capacity, discharge capacity, and the initial efficiency of the positive electrode are evaluated after manufacturing a coin-type half-cell secondary battery. A method for manufacturing the coin-type half-cell secondary battery is as follows.

The manufactured positive electrode is punched to the size of 1.4875 cm² (area), and an electrode assembly is manufactured using Li metal as a counter electrode and a polyolefin separator interposed between the positive electrode and the Li metal. 1M LiPF₆ is added to a non-aqueous electrolyte solution solvent in which ethylene carbonate and ethylmethyl carbonate are mixed at a volume ratio of 3:7 to prepare a non-aqueous electrolyte solution, and the non-aqueous electrolyte solution is injected into the electrode assembly to manufacture a coin-type half-cell secondary battery.

Additionally, when measuring the charge capacity, the discharge capacity, and the initial efficiency, the charge condition is 4.2V, 0.2C (2.15mA) (0.05C current cut-off) in CC/CV mode, and the discharge condition is 2.5V, 0.2C (2.15mA) (voltage cutoff) in CC mode.

The total charge capacity of the positive electrode is 13.47 mAh, and the total discharge capacity is 12.52 mAh. Here, the irreversible capacity is 0.94 mAh.
(the positive electrode is coated with the loading discharge capacity of 4mAh/cm², and the total winding area of the positive electrode is 12.52mAh/4mAh/cm² = 3.13cm²)

Additionally, the total charge capacity of the negative electrode is 13.88 mAh, and the total discharge capacity is 11.28 mAh, and in this instance, the irreversible capacity is 2.68 mAh.
(the negative electrode is coated with the loading discharge capacity of 4.4 mAh/cm², and the total area of the negative electrode spring is 2.583 cm², so the total discharge capacity of the negative electrode is 4.4mAh/cm² × 2.563cm² = 11.28 mAh, and the charge capacity is 11.28 mAh/(0.8129 (initial efficiency))= 13.68mh)

In this instance, the Li metal is coated on the copper wire as much as 2.4 mAh of the negative electrode irreversible capacity to prepare a Li metal coated wire. (Weight of Li metal having the capacity of 2.4 mAh = 2.4mAh/(3860 mAh/g) = 0.62mg

When 0.62 mg of Li metal is coated on the surface of the copper wire having a circular cross section with the diameter of 0.5 mm and the length of 10 cm, the coating thickness t of the Li metal may be calculated by the following equation: (0.62 × 10-3 g)/(3.14 × 0.05 cm × 10 cm × t) = lithium density (0.534 g/cm3) t = 7.395 µm )

The prepared wire-type negative electrode is spirally wound around the outer surface of the prepared lithium metal coated copper wire.

Subsequently, a polyethylene porous polymer film as a separation layer sheet is wound around the outer surface of the spirally wound wire-type negative electrode such that half the polyethylene porous polymer film overlaps.

The previously prepared sheet-type positive electrode is wound around the outer surface of the separation layer sheet such that half the sheet-type positive electrode overlaps, to form an electrode assembly. The active material near 5mm from the end of the electrode assembly is removed and an aluminum tab is connected. A battery structure having the capacity per unit length of 1.25 mAh/cm is manufactured in the total length of 10 cm.

Subsequently, a protective coating is formed around the outer surface of the polymer electrolyte coating layer. The protective coating is an insulator and is formed on the outermost side to protect the electrode from moisture in air and external impacts. The protective coating includes a PET polymer resin including an aluminum layer as a water barrier layer. The thickness of the protective coating is 64,um.

Subsequently, an electrolyte solution of 1M LiPF₆ in EC:PC:DEC(w/w%) = 2:1:7 is injected by immersing the electrode assembly having the protective coating in an electrolyte solution bath filled with the electrolyte solution. Subsequently, the electrode assembly is completely sealed to manufacture a flexible secondary battery. The length of the obtained flexible secondary battery is 10 cm, and the diameter is about 1.84 mm.

The initial the discharge capacity of the manufactured flexible secondary battery is 12.52 mAh.

In this instance, the initial discharge capacity is measured under the charge condition of 4.2V, 0.2C (2.15 mA) (0.05C current cut-off) in CC/CV mode, and the discharge condition of 2.5V, 0.2C (2.15 mA) (voltage cutoff) in CC mode.

### Comparative example 1

A flexible secondary battery is manufactured by the same method as example 1 except that the lithium metal coated copper wire is not used.

The initial discharge capacity of the manufactured flexible secondary battery is 10.78 mAh.

In this instance, the initial discharge capacity is measured under the charge condition of 4.2V, 0.2C (2.15mA) (0.05C current cut-off) in CC/CV mode, and the discharge condition of 2.5V, 0.2C (2.15mA) (voltage cutoff) in CC mode.

As a result of evaluating the initial discharge capacity of the flexible secondary batteries of example 1 and comparative example 1, it can be seen that there is a great capacity improvement in the flexible secondary battery of example 1 using the lithium metal coated wire since a Li ion released from the lithium metal coated wire is intercalated into the negative electrode, where the lithiation of the negative electrode is performed, thereby compensating the irreversibility of the negative electrode.

While the present disclosure has been hereinabove described, this is provided to describe the technical aspects by way of illustration, and those skilled in the art will appreciate that a variety of modifications and changes may be made thereto without departing from the essential features of the present disclosure. Accordingly, the embodiments disclosed herein are provided to describe the technical aspects of the present disclosure, but not intended to limit the technical aspects of the present disclosure, and the scope of the technical aspects of the present disclosure is not limited thereto. The scope of protection of the present disclosure should be interpreted by the appended claims, and all the technical aspects in the equivalent scope should be interpreted as residing in the scope of protection of the present disclosure.

## Claims

1. A flexible secondary battery, comprising:
a lithium metal coated wire;
a positive electrode wire spirally wound around an outer surface of the lithium metal coated wire, spaced apart at a predetermined interval, the positive electrode wire including a first porous coating layer formed on an outer surface; and
a negative electrode wire spirally wound around the outer surface of the lithium metal coated wire in an alternating manner with the wound positive electrode wire corresponding to the predetermined interval, the negative electrode wire including a second porous coating layer formed on an outer surface.

2. A flexible secondary battery, comprising:
a lithium metal coated wire;
a wire-type negative electrode spirally wound around an outer surface of the lithium metal coated wire;
a separation layer wound spirally around an outer surface of the wire-type negative electrode; and
a wire-type positive electrode spirally wound around an outer surface of the separation layer.

3. A flexible secondary battery, comprising:
a lithium metal coated wire;
a wire-type negative electrode spirally wound around an outer surface of the lithium metal coated wire;
a separation layer spirally wound around an outer surface of the wire-type negative electrode; and
a sheet-type positive electrode spirally wound around an outer surface of the separation layer.

4. The flexible secondary battery according to any one of claims 1 to 3, wherein the lithium metal coated wire is a lithium metal coated copper wire or a lithium metal coated nickel wire.

5. The flexible secondary battery according to any one of claims 1 to 3, wherein a lithium ion of the lithium metal coated wire in contact with the negative electrode moves to the positive electrode by liquid diffusion.

6. The flexible secondary battery according to claim 1, wherein the surface on which the positive electrode wire is wound and the surface on which the negative electrode wire is wound are placed on a same circumferential surface.

7. The flexible secondary battery according to claim 1, wherein the first porous coating layer and the second porous coating layer are an electrolyte layer or a separator independently of each other.

8. The flexible secondary battery according to claim 3, wherein the sheet-type positive electrode is spirally wound in an overlapping or non-overlapping configuration.

9. The flexible secondary battery according to any one of claims 1 to 3, wherein an outer surface of the flexible secondary battery is coated with a protective coating.

10. The flexible secondary battery according to any one of claims 1 to 3, wherein the flexible secondary battery is a lithium secondary battery.

## Patentansprüche

1. Flexible Sekundärbatterie, umfassend:
einen mit Lithiummetall beschichteten Draht;
einen positiven Elektrodendraht, der spiralförmig um eine äußere Oberfläche des mit Lithiummetall beschichteten Drahtes gewickelt ist, der in einem vorbestimmten Abstand beabstandet ist, wobei der positive Elektrodendraht eine erste poröse Schicht einschließt, die auf einer äußeren Oberfläche gebildet ist; und
einen negativen Elektrodendraht, der spiralförmig um die äußere Oberfläche des mit Lithiummetall beschichteten Drahtes gewickelt ist, und zwar abwechselnd mit dem gewickelten positiven Elektrodendraht, der dem vorgegebenen Intervall entspricht, wobei der negative Elektrodendraht eine zweite poröse Schicht einschließt, die auf einer äußeren Oberfläche gebildet ist.

2. Flexible Sekundärbatterie, umfassend:
einen mit Lithiummetall beschichteten Draht;
eine drahtartige negative Elektrode, die spiralförmig um eine äußere Oberfläche des mit Lithiummetall beschichteten Drahtes gewickelt ist;
eine Trennschicht, die spiralförmig um eine äußere Oberfläche der drahtartigen negativen Elektrode gewickelt ist; und
eine drahtartige positive Elektrode, die spiralförmig um eine äußere Oberfläche der Trennschicht gewickelt ist.

3. Flexible Sekundärbatterie, umfassend:
einen mit Lithiummetall beschichteten Draht;
eine drahtartige negative Elektrode, die spiralförmig um eine äußere Oberfläche des mit Lithiummetall beschichteten Drahtes gewickelt ist;
eine Trennschicht, die spiralförmig um die äußere Oberfläche der drahtförmigen negativen Elektrode gewickelt ist; und
eine blattartige positive Elektrode, die spiralförmig um eine äußere Oberfläche der Trennschicht gewickelt ist.

4. Flexible Sekundärbatterie nach einem der Ansprüche 1 bis 3, wobei der mit Lithiummetall beschichtete Draht ein mit Lithiummetall beschichteter Kupferdraht oder ein mit Lithiummetall beschichteter Nickeldraht ist.

5. Flexible Sekundärbatterie nach einem der Ansprüche 1 bis 3, wobei sich ein Lithiumion des mit Lithiummetall beschichteten Drahts, der mit der negativen Elektrode in Kontakt steht, durch Flüssigdiffusion zur positiven Elektrode bewegt.

6. Flexible Sekundärbatterie nach Anspruch 1, wobei die Oberfläche, auf die der positive Elektrodendraht gewickelt ist, und die Oberfläche, auf die der negative Elektrodendraht gewickelt ist, auf derselben Umfangsoberfläche positioniert sind.

7. Flexible Sekundärbatterie nach Anspruch 1, wobei die erste poröse Schicht und die zweite poröse Schicht unabhängig voneinander eine Elektrolytschicht oder ein Separator sind.

8. Flexible Sekundärbatterie nach Anspruch 3, wobei die blattartige positive Elektrode spiralförmig in einer überlappenden oder nicht überlappenden Konfiguration gewickelt ist.

9. Flexible Sekundärbatterie nach einem der Ansprüche 1 bis 3, wobei eine äußere Oberfläche der flexiblen Sekundärbatterie mit einer Schutzschicht überzogen ist.

10. Flexible Sekundärbatterie nach einem der Ansprüche 1 bis 3, wobei die flexible Sekundärbatterie eine Lithiumsekundärbatterie ist.

## Revendications

1. Batterie secondaire souple, comprenant :
un fil revêtu de métal lithium ;
un fil d'électrode positive enroulé en spirale autour d'une surface extérieure du fil revêtu de métal lithium, espacé à un intervalle prédéterminé, le fil d'électrode positive incluant une première couche de revêtement poreuse formée sur une surface extérieure ; et
un fil d'électrode négative enroulé en spirale autour de la surface extérieure du fil revêtu de métal lithium d'une manière alternée avec le fil d'électrode positive enroulé correspondant à l'intervalle prédéterminé, le fil d'électrode négative incluant une seconde couche de revêtement poreuse formée sur une surface extérieure.

2. Batterie secondaire souple, comprenant :
un fil revêtu de métal lithium ;
une électrode négative de type fil enroulée en spirale autour d'une surface extérieure du fil revêtu de métal lithium ;
une couche de séparation enroulée en spirale autour d'une surface extérieure de l'électrode négative de type fil ; et
une électrode positive de type fil enroulée en spirale autour d'une surface extérieure de la couche de séparation.

3. Batterie secondaire souple, comprenant :
un fil revêtu de métal lithium ;
une électrode négative de type fil enroulée en spirale autour d'une surface extérieure du fil revêtu de métal lithium ;
une couche de séparation enroulée en spirale autour d'une surface extérieure de l'électrode négative de type fil ; et
une électrode positive de type feuille enroulée en spirale autour d'une surface extérieure de la couche de séparation.

4. Batterie secondaire souple selon l'une quelconque des revendications 1 à 3, dans laquelle le fil revêtu de métal lithium est un fil de cuivre revêtu de métal lithium ou un fil de nickel revêtu de métal lithium.

5. Batterie secondaire souple selon l'une quelconque des revendications 1 à 3, dans laquelle un ion lithium du fil revêtu de métal lithium en contact avec l'électrode négative se déplace vers l'électrode positive par diffusion liquide.

6. Batterie secondaire souple selon la revendication 1, dans laquelle la surface sur laquelle le fil d'électrode positive est enroulé et la surface sur laquelle le fil d'électrode négative est enroulé sont placées sur une même surface circonférentielle.

7. Batterie secondaire souple selon la revendication 1, dans laquelle la première couche de revêtement poreuse et la seconde couche de revêtement poreuse sont une couche d'électrolyte ou un séparateur indépendamment l'une de l'autre.

8. Batterie secondaire souple selon la revendication 3, dans laquelle l'électrode positive de type feuille est enroulée en spirale selon une configuration avec ou sans chevauchement.

9. Batterie secondaire souple selon l'une quelconque des revendications 1 à 3, dans laquelle une surface extérieure de la batterie secondaire souple est revêtue d'un revêtement protecteur.

10. Batterie secondaire souple selon l'une quelconque des revendications 1 à 3, dans laquelle la batterie secondaire souple est une batterie secondaire au lithium.
